# Europäisches Patentamt
## European Patent Office
### Office européen des brevets

(19)

(11) Publication number: **0 274 424**
**A2**

(12)

# EUROPEAN PATENT APPLICATION

(21) Application number: **88300061.4**

(22) Date of filing: **06.01.88**

(51) Int. Cl.⁴: **B 29 C 47/00**
**C 08 L 23/00**

(30) Priority: **07.01.87 GB 8700261**

(43) Date of publication of application:
**13.07.88 Bulletin 88/28**

(84) Designated Contracting States:
**BE DE FR IT NL SE**

(71) Applicant: **DU PONT CANADA INC.**
**Box 2200 Streetsville Postal Station**
**Mississauga Ontario L5M 2H3 (CA)**

(72) Inventor: **Sawden, Francis Henry**
**Box 1063 Group 10 R.R. No. 1**
**Newcastle Ontario L0A 1HO (CA)**

(74) Representative: **Ellis, John Clifford Holgate et al**
**MEWBURN ELLIS & CO. 2/3 Cursitor Street**
**London EC4A 1BQ (GB)**

(54) Manufacture of plastic pipe having barrier properties.

(57) A process for the manufacture of plastic pipe from a blend of polyolefin, polymer incompatible with the polyolefin and a compatibilizer for the polyolefin and the incompatible polymer is disclosed. The process comprises:

(a) forming a homogeneous mixture of a first incompatible polymer and an effective amount of a first compatibilizer with the polyolefin wherein the ratio of the first incompatible polymer to polyolefin is from about 1:40 to 1:2;

(b) blending a second incompatible polymer and an effective amount of a second compatibilizer with the homogeneous mixture, wherein the the ratio of the second incompatible polymer to first incompatible polymer is from about 1:2 to 2:1, and the ratio of the incompatible polymers plus compatibilizer to polyolefin is from about 1:20 to 1:1;

(c) extruding a molten heterogeneous blend of the resulting admixture, at a temperature above the melting point of the highest-melting polymer in the blend, in the form of pipe using a low level of shear in the extruder; and

(d) withdrawing the extruded pipe.

Plastic pipe made by the process of the present invention exhibits improved resistance to permeation by hydrocarbon liquids and possesses good mechanical properties.

EP 0 274 424 A2

Bundesdruckerei Berlin

**Description**

Manufacture of Plastic Pipe Having Barrier Properties

The present invention relates to plastic pipe made from a heterogeneous blend of polyolefin in a continuous phase and a polymer incompatible with the polyolefin and which exhibits controlled dispersion characteristics in a discontinuous phase, and when the incompatible polymer is a barrier resin, also exhibits improved barrier resistance to permeation.

Polyolefin, particularly polyethylene, pipe is used commercially in a variety of end uses, for example, as water piping, for relining sewer lines, as piping for mine tailings and as natural gas piping. However, hydrocarbon liquids tend to permeate polyolefins, hindering the use of polyolefin pipe as, for example, a liner material for oil pipe lines.

United States Patent 3 373 224 of R. B. Mesrobian et al., issued 1968 March 12, discloses homogeneous blends of polyolefin, nylon 6 and a compatibilizer material, e.g., a copolymer of ethylene and methacrylic acid containing 96 molar percent ethylene and 4 molar percent methacrylic acid, the methacrylic acid being about 38 percent neutralized by sodium ions. The patent discloses that such homogeneous blends produced by kneading together the three separate polymers as a molten mass, exhibit decreased permeability and improved mechanical properties compared to blends having no compatibilizer material.

United States Patent 4 410 482 of P. M. Subramanian, issued on 1983 October 18, discloses a lamellar, shaped article manufactured from a molten heterogeneous blend of polyolefin, a second polymer that is incompatible with the polyolefin, and an alkylcarboxyl-substituted polyolefin compatibilizer obtained, for example, by melt grafting fumaric acid onto high density polyethylene in amount of about 0.9 weight percent. The article is made by stretching a body of the molten heterogeneous blend and cooling the stretched body to a temperature below the melting point of the lowest melting component polymer. The polyolefin and the incompatible polymer are present in the article as a multitude of thin, substantially two-dimensional, parallel and overlapping layers of material. The compatibilizer is believed to be present between the layers, adhering the layers together.

It has now been found that in the manufacture of pipe from mixtures of polyolefin, a second polymer incompatible with the polyolefin and compatibilizer therefor, in which the mixtures are made by mixing the polyolefin incompatible polymer and compatibilizer, superior controlled dispersion of the incompatible polymer may be obtained by withholding a portion of the second polymer and the compatibilizer from a primary mixing step, and blending that portion in a low-shear blending step immediately before a low-shear pipe extrusion step.

Acccrdingly, the present invention provides a process for the manufacture of plastic pipe from a blend of polyolefin, polymer incompatible with said polyolefin and compatibilizer for said incompatible polymer and said polyolefin, the process comprising the steps of:

(a) forming a homogeneous mixture of a first incompatible polymer and an effective amount of a first compatibilizer with said polyolefin wherein the ratio of first incompatible polymer to polyolefin is from about 1:40 to 1:2;

(b) blending a second incompatible polymer and an effective amount of a second compatibilizer with said homogeneous mixture, wherein the ratio of second incompatible polymer to first incompatible polymer is from about 1:2 to 2:1, and the ratio of incompatible polymers plus compatibilizer to polyolefin is from about 1:20 to 1:1;

(c) extruding a molten heterogeneous blend of the resulting admixture at a temperature above the melting point of the highest-melting polymer in the blend in the form of pipe using a low level of shear; and

(d) withdrawing the extruded pipe thus obtained.

All references to parts and percentages herein are on a weight basis, unless otherwise indicated.

In an embodiment of the process of the present invention, the first and second compatibilizers are alkylcarboxyl-substituted polyolefins independently selected from the group consisting of polyolefins which have carboxylic moieties attached thereto, either on the polyolefin backbone itself or on side chains.

In another embodiment of the process of the present invention, in step (b) the blending is carried out by dry blending and the homogeneous mixture comprises a previously melt-blended homogeneous mixture.

In yet another embodiment of the process of the present invention, the first incompatible polymer and the first compatibilizer are blended to produce a first pre-blend prior to mixing with the polyolefin in step (a). Alternatively or additionally, the second incompatible polymer and the second compatibilizer are blended to produce a second pre-blend prior to admixing with the homogeneous mixture in step (b). Either or both of the first and second pre-blends may be prepared by dry blending, melt blending, or a combination of dry blending and melt blending. In the method using a combination of dry blending and melt blending, the compatibilizer portion of the pre-blend and from about 4 to 15 percent of the incompatible polymer portion of the pre-blend are melt blended by methods known to those skilled in the art and the remainder of the incompatible polymer is dry blended with the melt-blended portion of the pre-blend to form a partially melt-blended pre-blend.

The polyolefin may be polyethylene, polypropylene or polybutylene, and is preferably polyethylene. Preferred types of polyethylene are copolymers of ethylene and at least one alpha-olefin having from 4 to 10 carbon atoms.

When polyethylene is used as the polyolefin in the manufacture of plastic pipe according to the process of the present invention, the polyolefin preferably has a density of at least 0.935 g/cm³ and may be any homopolymer of ethylene or copolymer of ethylene and at least one hydrocarbon alpha-olefin of 4 to 10 carbon atoms, having the aforementioned density and suitable for plastic pipe manufacture. The preferred polyethylene is a copolymer of ethylene and butene-1, having a density in the range of from 0.938 to 0.944 g/cm³ and a melt index of less than about 0.40 dg/min.

The polymer incompatible with the polyolefin may be polyamide, often referred to as nylon; polyester, for example, polyethylene terephthalate or polybutylene terephthalate; polyvinyl alcohol; or ethylene/vinyl alcohol copolymer. As used herein, the term "incompatible" denotes "having substantially no mutual miscibility with the polyolefins in the melt state". A selection of incompatible polymer may be made on the basis of barrier properties desired in the final product. For example, the use of polyamide as the incompatible polymer produces a finished pipe having enhanced resistance to the transmission of hydrocarbons, which may be useful in oilfield service for carrying natural gas liquids, condensate and crude oil.

If polyamide is selected as the incompatible polymer in the process of the present invention, the polymer may be a polyamide or a copolyamide having from four to 12 carbon atoms in the repeating unit. Exemplary polyamides include polypentamethylene adipamide, polyhexamethylene adipamide, polyhexamethylene sebacamide and polycaprolactam. Polyhexamethylene adipamide (nylon 66) and polycaprolactam (nylon 6) are the preferred polyamides. Preferred copolyamides are hexamethylene adipamide/caprolactam copolymers, which are often referred to as nylon 66/6, especially such copolymers containing from 10 to 30 weight percent caprolactam. The first polyamide used in the mixing step (a) and the second polyamide used in the admixing step (b) are independently selected from the range of polyamides listed hereinabove. For example, where the utmost in physical properties is desired, for example, tensile strength, it may be preferable to select a polyamide for the mixing step (a) which gives the desired physical properties in the pipe, and to select a different second polyamide for the admixing step (b) to give the desired barrier properties. In general, however, the first polyamide and the second polyamide are preferably the same polymer.

If the incompatible polymers are selected from the polyamides listed above, the concentration of the incompatible polymers plus compatibilizer, relative to the polyolefin, is preferably from about 1:7 to 1:3, and most preferably about 1:5. The incompatible polymers are added to the polyolefin in two steps; the first incompatible polymer, added in the first step, constitutes between one-third and two-thirds of the total incompatible polymer, thus the ratio of first incompatible polymer to second incompatible polymer can be from about 1:2 to 2:1 and is preferably about 1:1.

The compatibilizer of each step is provided in an amount effective to render the incompatible polymer of said step compatible with the polyolefin in the molten state, but less than the amount that would render the polymer blend fully homogeneous after admixing step (b). Advantageously the compatibilizer of each step is present in a ratio to the incompatible polymer of that step in the range from about 1:10 to 1:1, preferably in the range from about 1:5 to 1:3; the ratio of compatibilizer to incompatible polymer may be independently varied in the heterogeneous blend of polymers and in the homogeneous mixture within this range, but is conveniently the same in both. When the proportion of incompatible polymer in the final mixture is low, for example, when the ratio of the sum of first incompatible polymer and second incompatible polymer (total incompatible polymer) to polyolefin is from about 1:40 to 1:10, the ratio of total incompatible polymer to total compatibilizer is preferably from about 4:1 to 1:1. A higher ratio of compatibilizer to incompatible polymer appears to be needed when the incompatible polymer concentration in the polymer blend is low. Conversely, when the total incompatible polymer to polyolefin ratio is above about 1:10, less compatibilizer is generally needed, and the ratio of incompatible polymer to compatibilizer is preferably from about 10:1 to 4:1, and most preferably about 5:1.

Preferably the compatibilizer for polyolefin and polymer incompatible therewith used in the process of the present invention is a polyolefin which has carboxylic moieties attached thereto, either on the polyolefin backbone itself or on side chains. By "carboxylic moiety" is meant carboxylic groups selected from the group consisting of acids, esters, anhydrides, and salts. Carboxylic salts are neutralized carboxylic acids, and a compatibilizer which includes carboxylic salts as a carboxylic moiety usually also includes the carboxylic acid of that salt; examples of such compatibilizers are the ionomeric polymers.

Compatibilizers may be prepared by direct synthesis or by grafting. An example of direct synthesis is the polymerization of an alpha-olefin with an olefinic monomer having a carboxylic moiety. An example of grafting is the addition of monomer having a carboxylic moiety to a polyolefin backbone. In the compatibilizer made by grafting, the polyolefin is preferably a homopolymer of ethylene or a copolymer of ethylene and at least one hydrocarbon alpha-olefin of 3 to 8 carbon atoms, for example propylene, butene-1, hexene-1 and octene-1, or a copolymer including at least one hydrocarbon alphaolefin of 2 to 8 atoms and a diolefin, for example 1,4-hexadiene, and the like. The polyolefin is reacted with an unsaturated carboxylic acid, anhydride, or ester monomer to obtain the grafted polymer. Representative acids, anhydrides, and esters include: methacrylic acid; acrylic acid; ethacrylic acid; glycidyl methacrylate; 2-hydroxy ethylacrylate; 2-hydroxy ethyl methacrylate; diethyl maleate; monoethyl maleate; di-n-butyl maleate; maleic anhydride; maleic acid; fumaric acid; itaconic acid; monoesters of such dicarboxylic acids; dodecenyl succinic anhydride; 5-norbornene- 2,3-anhydride; nadic anhydride (3,6-endomethylene- 1,2,3,6-tetrahydrophthalic anhydride); and the like. Preferably the graft polymer will have from about 0.1 to about 10, and more preferably about 0.2 to about 5, weight percent graft monomer.

In the compatibilizer made by direct synthesis, the polymeric material may be a copolymer of an alphaolefin of 2 to 20 carbon atoms and an alpha, beta ethylenically unsaturated carboxylic acid, ester, anhydride, or salt

3

having 1 or 2 carboxylic moieties. The directly synthesized compatibilizer may be made up of at least 75 mole percent of the olefin component and from about 0.2 to 25 mole percent of the carboxylic component.

Ionomeric compatibilizers are preferably made from directly synthesized compatibilizer and are preferably made up of about 90 to 99 mol percent olefin and about 1 to 10 mol percent alpha, beta- ethylenically unsaturated monomer having carboxylic moieties wherein the moieties are considered as acid equivalents and are neutralized with metal ions having valences of 1 to 3, inclusive, where the carboxylic acid equivalent is monocarboxylic, and are neutralized with metal ions having a valence of 1 where the carboxylic acid equivalent is dicarboxylic. To control the degree of neutralization, metal ions are present in an amount sufficient to neutralize at least 10 percent of the carboxyl moieties.

The compatibilizer preferably contains about 0.5 to 3.0 weight percent of carboxylic component.

In the manufacture of plastic pipe according to the process of the present invention it is preferable that the compatibilizer of each step and the incompatible polymer of that step be dry blended together before being blended with polyolefin. Dry blending is generally carried out in pellet form. It may be desirable for enhanced compatibilizer activity, to melt blend the compatibilizer with from 5 to 15 weight percent of the incompatible polymer and then dry blend the melt blended mixture with the remainder of the incompatible polymer. The melt blending step may be carried out in an extruder under high shear, with the mixture being repelletized prior to dry blending with the remainder of the incompatible polymer.

Preferably the first incompatible polymer and the first compatibilizer are melt blended with the polyolefin to produce a homogeneous mixture, which is then pelletized. The second incompatible polymer and second compatibilizer are preferably dry blended with the pelletized homogeneous mixture to produce a dry blended mixture having the final product composition.

The dry blended mixture is then heated, preferably in a screw extruder under low shear, to a melt temperature above the melting point, preferably in a range of from 1°C to 15°C above the melting point, of the highest-melting polymer in the blend to form a molten heterogeneous blend, which is extruded through a suitable die to form pipe. Preferably, the extruder does not have a breaker plate or a screen, so as to reduce mixing to as low a level as possible.

By virtue of the low shear rate in the extrusion and the delayed addition of a portion of the incompatible polymer to the polymer blend, the incompatible polymer is present in the extruded pipe as a discontinuous separate phase in the shape of islands or platelets having two elongated dimensions in the plane of the wall section of the pipe. Thus the platelets of incompatible polymer can act as a barrier to the permeation of undesirable materials through the pipe wall.

In the manufacture of plastic pipe according to the invention, superior controlled dispersion of the incompatible polymer is obtained. This may result in equivalent mechanical properties and superior hydrocarbon fluid barrier properties, if the second polymer has good barrier properties, when the polyolefin and a part of the second polymer and compatibilizer and homogeneously melt blended and thereafter the homogeneous material and the remainder of the second polymer are compatibilizer are formed into a molten heterogeneous blend and extruded into pipe using a low level of shear in the extruder, in comparison with either (1) forming the polyolefin and the total amount of second polymer and compatibilizer into a molten homogeneous blend and extruding into pipe using a high level of shear in the extruder, or (2) forming the polyolefin and the total second polymer and compatibilizer into a molten heterogeneous blend and extruding into pipe using a low level of shear in the extruder.

The present invention is illustrated by the following examples:

Example I

In this example, plastic pipe according to the process of the present invention was made from polyethylene, nylon polymer and compatibilizer for nylonpolyethylene (Run 1). Two comparative runs (Runs 2 and Run 3) were also carried out. In Run 2, the plastic pipe was made from the same polyethylene, nylon polymer and compatibilizer, but not according to the present invention. In Run 3 plastic pipe was made from the polyethylene only.

The polyethylene was SCLAIR* (* denotes trademark) 51-35B polyethylene available from Du Pont Canada Inc. Such polyethylene resin is a copolymer of ethylene and butene-1 having a density within the range of from 0.938 to 0.944 g/cm³ and a melt index of less than about 0.40 dg/min. Particles of the polyethylene were disc-shaped pellets having a diameter of about 4.5 mm and a length of 1.8 mm.

The nylon polymer was a nylon 66/6 (80:20) copolymer having a melting point of about 225°C. The nylon 66/6 copolymer particles were box-like pellets having a length of 3.8 mm, a width of 3.4 mm and a height of 2.2 mm.

The alkylcarboxyl-substituted polyolefin compatibilizer was obtained by melt grafting fumaric acid onto polyethylene having a density of 0.958 g/cm³ and a melt index of about 10 dg/min as determined according to ASTM D-1238 (Condition E). The fumaric acid was grafted onto the polyethylene in an amount of about 1.0 weight percent based on the total weight of the polymer in accordance with the teachings of U.S. Patent No. 4 026 967 of Flexman, Jr. et al., issued 1977 May 31. Particles of the compatibilizer were in the form of an elliptical cylinder with a major axis of 2.5 mm, a minor axis of 2.0 mm and a length of 2.8 mm.

Prior to Run 1, two parts of compatibilizer were melt blended with one part nylon 66/6 copolymer and repelletized, the pellets of the resultant melt-blended compatibilizer being of the same shape as the compatibilizer with a major axis of 3 mm, a minor axis of 2.1 mm and a length of 2.4 mm. One part of the melt blended compatibilizer was then dry blended with three parts of nylon 66/6 copolymer to produce a mixture comprising 83.3 weight percent nylon 66/6 copolymer and 16.7 weight percent compatibilizer.

In Run 1, nine parts of polyethylene were melt blended with one part of the mixture comprising 83.3 weight percent nylon 66/6 copolymer and 16.7 weight percent compatibilizer in a screw extruder under high shear at a melt temperature of 234°C, to produce a homogeneous mixture containing 90 weight percent polyethylene, 8.33 weight percent nylon 66/6 copolymer and 1.67 weight percent compatibilizer. The homogeneous mixture was then repelletized. Particles of the homogeneous repelletized mixture were rod-shaped with a length of 2.5 mm and a diameter of 2.3 mm. Nine parts of the repelletized homogeneous mixture were dry blended with one part of the dry blended mixture comprising 83.3 weight percent nylon 66/6 copolymer and 16.7 weight percent compatibilizer.

The resulting blended mixture contained 81.0 weight percent polyethylene, 15.83 weight percent nylon 66/6 copolymer and 3.17 weight percent compatibilizer. The blended mixture was heated in a screw extruder under low shear to a melt temperature of 227°C (approximately 2°C above the melting point of the nylon 66/6 copolymer) to form a molten substantially heterogeneous blend, which was extruded through a suitable die as 2 inch diameter pipe. To reduce mixing to as low a level as possible, the extruder was not equipped with either a breaker plate or a screen.

In Run 2, eighty-two parts of polyethylene were dry blended with 18 parts of the dry blended mixture comprising 83.3 weight percent nylon 66/6 copolymer and 16.7 weight percent compatibilizer. The resulting blended mixture contained 82.0 weight percent polyethylene, 15.0 weight percent nylon 66/6 copolymer and 3.0 weight percent compatibilizer. The blended mixture was heated in a screw extruder under low shear (as in Run 1) to a melt temperature of 232°C (approximately 7°C above the melting point of the nylon 66/6 copolymer) to form a substantially heterogeneous blend, which was extruded through a suitable die as 2 inch diameter pipe. As was the case for Run 1, the extruder was not equipped with either a breaker plate or a screen. As a melt blended homogeneous mixture of polyethylene, nylon polymer and compatibilizer was not produced prior to the heterogeneous blend in Run 2, Run 2 was outside the scope of the present invention.

In Run 3, the polyethylene only was heated in a screw extruder under low shear to a melt temperature of 227°C and extruded through a suitable die as 2 inch diameter pipe.

A permeation test, similar to ASTM D2684 entitled "Determining Permeability of Thermoplastic Containers" was carried out on a short sample of the plastic pipe produced in each of Run 1, Run 2 and Run 3. The test comprised filling the short pipe samples with xylene, sealing the pipe ends and holding for 30 days at a temperature of 60 C. At the end of the 30 day period, the average weight loss in grams per day (g/d) was calculated by weight difference of the filled pipe before and after the test. To compensate for any variation in wall thickness and surface area of the samples a "g/d100" value was calculated as follows:

$$g/d100 = g/d \times (\text{wall thickness in mm}) \times .01 \text{ cm}^2$$

The results are summarized in Table 1.

Upon the termination of the permeability tests, a xylene treated sample and an untreated (non-xylene treated) sample of each pipe were tested for tensile properties on a Instron* (* denotes trademark) tensile testing machine at a crosshead speed of 5 cm/minute.

These results are also summarized in Table 1.

## TABLE 1

|  | RUN 1 | RUN 2 | RUN 3 |
|---|---|---|---|
| XYLENE LOSS (g/d) | 0.0961 | 0.129 | 1.505 |
| XYLENE LOSS (g/d100) | 0.345 | 0.444 | 5.512 |
| RELATIVE BARRIER IMPROVEMENT OVER RUN 3 | 16X | 12X | - |
| TENSILE PROPERTIES | A/B | A/B | A/B |
| YIELD STRENGTH (MPa) | 20.8/19.1 | 19.7/19.2 | 18.7/17.1 |
| ULTIMATE STRENGTH (MPa) | 15.2/14.1 | 15.2/15.0 | 11.9/11.7 |
| ELONGATION (Percent) | 388/394 | 481/456 | 594/669 |
| MODULUS (MPa) | 284.7/192.6 | 280.1/186.4 | 229.7/171.2 |

NB: 1. "A" refers to untreated pipe sections; "B" refers to xylene treated pipe sections.
2. Run 2 and Run 3 are outside the scope of the present invention.

The above results indicate that pipe made according to the present invention (Run 1) has better barrier properties and at least as good tensile properties as the two pipes made according to comparative processes (Runs 2 and 3).

Example 2

In this example, plastic pipe according to the process of the present invention was made from a polyethylene, nylon polymer and compatibilizer for nylon-polyethylene (Run 4). Three comparative runs (Runs 5, 6 and 7) were also carried out. In Run 5 and Run 6, plastic pipe was made from the same polyethylene, nylon polymer and compatibilizer as were used for Run 4. Runs 5 and 6, however, were not according to the process of the present invention. In Run 7, plastic pipe was made from the polyethylene used in Run 4 without any nylon polymer or compatibilizer being added, and thus was not according to the present invention.

The polyethylene was SCLAIR 35B polyethylene resin available from Du Pont Canada Inc. Such polyethylene resin is a copolymer of ethylene and butene-1 melt blended with about 2.2 weight percent of carbon black. The blend had a density within the range of from 0.949 to 0.954 g/cm$^3$ and a melt index of less than about 0.25 dg/min.

The nylon polymer was the same nylon 66/6 copolymer as was used in Example 1 and the compatibilizer was the same alkylcarboxyl-substituted polyolefin compatibilizer as was used in Example 1. A blended mixture of nylon polymer and compatibilizer comprising 83.3 weight percent nylon 66/6 copolymer and 16.7 weight percent compatibilizer prepared as described in Example 1, was also used in this example.

Run 4 was carried out in the same manner and under the same conditions as was Run 1 of Example 1, except that: (1) in the melt blending step to produce the homogeneous mixture containing 90 weight percent polyethylene, 8.33 weight percent nylon 66/6 copolymer and 1.67 weight percent compatibilizer, the melt temperature was 230°C instead of 234°C; and (2) in the step of heating the blended mixture of 81.0 weight percent polyethylene, 15.83 weight percent nylon 66/6 copolymer and 3.17 weight percent compatibilizer in the extruder under low shear, the melt temperature achieved was 233°C (approximately 8°C above the melting point of the nylon 66/6 copolymer) instead of 227°C.

Run 5 was carried out in the same manner and under the same conditions as was Run 2 of Example 1.

In Run 6, four parts of polyethylene (containing approximately 2.2 weight percent of carbon black) was dry blended with one part of the dry blended mixture comprising 83.3 weight percent nylon 66/6 copolymer and 16.7 weight percent compatibilizer. The resulting blended mixture contained 80.0 weight percent high density polyethylene, 16.67 weight percent nylon 66/6 copolymer and 3.33 weight percent compatibilizer.

The dry blended mixture was melt blended in a screw extruder under high shear at a melt temperature of 231°C (approximately 6°C above the melting point of the nylon 66/6 copolymer) to form a homogeneous blend, which was extruded through a suitable die as 2 inch diameter pipe. The extruder was equipped with both a breaker plate and a screen. As a heterogeneous blend of polyethylene, nylon polymer and compatibilizer was not produced in Run 6, Run 6 was also outside the scope of the process of the present invention.

In Run 7, the polyethylene (containing approximately 2.2. weight percent of carbon black) was heated in an extruder under high shear to a melt temperature of 210°C and extruded through a suitable die as 2 inch diameter pipe. The extruder was equipped with both a breaker plate and a screen.

A permeation test, as described in Example 1, was carried out on a sample of the plastic pipe produced in each of Runs 4, 5, 6 and 7. The results are summarized in Table 2.

Upon the termination of the permeability tests, a xylene treated sample and an untreated (non-xylene treated) sample of each pipe were tested for tensile properties as described in Example 1.

The results are also summarized in Table 2.

0 274 424

## TABLE 2

| | RUN 4 | RUN 5 | RUN 6 | RUN 7 |
|---|---|---|---|---|
| XYLENE LOSS (g/d) | 0.101 | 0.129 | 0.370 | 1.414 |
| XYLENE LOSS (g/d100) | 0.368 | 0.470 | 1.409 | 5.153 |
| RELATIVE BARRIER IMPROVEMENT OVER RUN 7 | 14X | 11X | 4X | − |
| TENSILE PROPERTIES | A/B | A/B | A/B | A/B |
| YIELD STRENGTH (MPa) | 21.7/18.8 | 21.9/18.8 | 21.8/19.1 | 21.0/18.6 |
| ULTIMATE STRENGTH (MPa) | 15.9/16.8 | 16.0/18.0 | 15.9/19.9 | 13.1/13.2 |
| ELONGATION (Percent) | 410/490 | 406/556 | 456/531 | 613/719 |
| MODULUS (MPa) | 312/193 | 298/195 | 330/229 | 280/184 |

NB: 1. Runs 5, 6 and 7 are outside the scope of the present invention.

2. "A" refers to untreated pipe sections; "B" refers to xylene treated pipe sections.

## Claims

1. A process for the manufacture of plastic pipe from a blend of polyolefin, polymer incompatible with said polyolefin and compatibilizer for said incompatible polymer and said polyolefin, the process comprising the steps of:

(a) forming a homogeneous mixture of a first incompatible polymer and an effective amount of a first compatibilizer with said polyolefin wherein the ratio of first incompatible polymer to polyolefin is from about 1:40 to 1:2;

(b) blending a second incompatible polymer and an effective amount of a second compatibilizer with said homogeneous mixture, wherein the ratio of second incompatible polymer to first incompatible polymer is from about 1:2 to 2:1, and the ratio of incompatible polymers plus compatibilizer to polyolefin is from about 1:20 to 1:1;

(c) extruding a molten heterogeneous blend of the resulting admixture at a temperature above the melting point of the highest-melting polymer in the blend in the form of pipe using a low level of

8

shear; and

(d) withdrawing the extruded pipe thus obtained.

2. The process of Claim 1 in which the first and second compatibilizers are alkylcarboxyl-substituted polyolefins independently selected from the group consisting of polyolefins which have carboxylic moieties attached thereto, either on the polyolefin backbone itself or on side chains.

3. The process of Claim 1 or Claim 2 in which the first and second compatibilizers are the same.

4. The process of Claim 1 or Claim 2 in which the first and second compatibilizers are different.

5. The process of Claims 1-3 in which the homogeneous mixture comprises a previously melt-blended homogeneous mixture and, in step (b), the blending is carried out by dry blending.

6. The process of Claims 1-4 in which the first incompatible polymer and the first compatibilizer are blended to produce a first pre-blend prior to mixing with the polyolefin in step (a).

7. The process of Claims 1-6 in which the second incompatible polymer and the second compatibilizer are blended to produce a second pre-blend prior to admixing with the homogeneous mixture in step (b).

8. The process of Claims 1-6 in which the second incompatible polymer and the second compatibilizer are blended to produce a second pre-blend prior to admixing with the homogeneous mixture in step (b).

9. The process of Claims 1-8 in which the polyolefin is polyethylene.

10. The process of Claim 9 in which the polyethylene has a density in the range of 0.938-0.944 g/cm$^3$.

11. The process of Claims 1-10 in which the incompatible polymer is selected from the group consisting of polyamide, polyester, polyvinyl alcohol and ethylene/vinyl alcohol copolymer.

12. The process of Claims 1-10 in which the incompatible polymer is a polyamide selected from the group consisting of polyamides and copolyamides having 4-12 carbon atoms in the repeating units.